# EUROPEAN PATENT APPLICATION

(11) **EP 3 552 889 A1**
(43) Date of publication of application: **16.10.2019**
(21) Application number: 19165098.5
(22) Date of filing: 26.03.2019
(51) Int. Cl.: B60R 21/015, G01S 13/42

(54) **LIVING BODY DETECTION SYSTEM**

(30) Priority: 26.03.2018 JP 2018057523
(71) Applicant: AISIN SEIKI KABUSHIKI KAISHA, Kariya-shi Aichi-ken, 448-8650 (JP)
(72) Inventor: TAKEMOTO, Atsushi, KARIYA-SHI, AICHI-KEN, 448-8650 (JP); AOYAGI, Yosuke, KARIYA-SHI, AICHI-KEN, 448-8650 (JP); MOCHIZUKI, Kenta, KARIYA-SHI, AICHI-KEN, 448-8650 (JP)
(74) Representative: Cabinet Beau de Loménie

(57) **Abstract**

A living body detection system (20) includes a transmitting and receiving unit (22) performing transmission and reception of detection waves at an inside of a movable body, the detection waves including directivity in at least one of the transmission and the reception of the detection waves, and a processing unit (40) controlling the transmission of the detection waves and extracting living body information from a receiving signal based on the detection waves received by the transmitting and receiving unit (22) to detect a living body at the inside of the movable body.

## Description

### TECHNICAL FIELD

This disclosure generally relates to a living body detection system.

### BACKGROUND DISCUSSION

A system mounted at a movable body such as an automobile, for example, to detect a living body such as a passenger, for example, at an inside of the movable body is known. The system transmits detection waves such as radio waves, for example, to the inside of the movable body to receive reflected detection waves from an object including the living body within the movable body so as to detect whether or not the object from which the detection waves are reflected is the living body. Such system is disclosed in JP2017-114317A, JPH08-127264A, and JP2017-181225A, for example.

According to the aforementioned system, the detection waves are transmitted to a wide area within the movable body. Therefore, even though the living body is detected and determined, it may be difficult to accurately determine the position of the living body.

A need thus exists for a living body detection system which may highly accurately detect a position of a living body besides existence thereof.

### SUMMARY

According to an aspect of this disclosure, a living body detection system includes a transmitting and receiving unit performing transmission and reception of detection waves at an inside of a movable body, the detection waves including directivity in at least one of the transmission and the reception of the detection waves, and a processing unit controlling the transmission of the detection waves and extracting living body information from a receiving signal based on the detection waves received by the transmitting and receiving unit to detect a living body at the inside of the movable body.

Accordingly, the living body at the inside of the movable body is detectable by the detection waves and a position of the living body is detectable highly accurately.

The transmitting and receiving unit is configured to change a detection width serving as a width of the detection waves which are transmitted or received by the transmitting and receiving unit. The processing unit detects the living body by changing the detection width of the detection waves.

Accordingly, an area where the living body is detectable is changeable depending on intended use. The living body detection system may highly accurately determine the position of the living body by increasing directivity of the detection waves while decreasing the detection width of the detection waves. In addition, the living body detection system may determine existence of the living body at a wide area within the movable body with a less processing burden of one time transmission and reception of the detection waves by the transmission or the reception of the detection waves at an entire region within the movable body by specifying the detection width of the detection waves to be large.

The processing unit moves at least one of a transmitting direction and a receiving direction of the detection waves including directivity between areas which are arranged to be separated from one another.

Accordingly, while a processing burden of the processing unit is reduced by a less number of transmitting and receiving unit, the living body is detectable at plural specific portions at the inside of the movable body.

The processing unit continuously moves at least one of a transmitting direction and a receiving direction of the detection waves including directivity.

Accordingly, regardless of the position of the living body, the living body is detectable.

The processing unit extracts the living body information as a numerical value from the receiving signal and classifies the living body based on the numerical value and a threshold value.

Accordingly, a type of the living body may be accurately classified on a basis of the numerical value and the threshold value.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a side view of a vehicle at which a living body detection system is mounted according to first to third embodiments disclosed here;
Fig. 2 is a block diagram illustrating a configuration of a control system of the living body detection system mounted at the vehicle according to the first to third embodiments;
Fig. 3 is a side view of an interior of the vehicle for explaining transmission of detection waves with high directivity according to the first embodiment;
Fig. 4 is a view of the interior of the vehicle viewed from a front side for explaining the transmission of the detection waves with high directivity according to the first embodiment;
Fig. 5 is a view of a rear portion of the vehicle interior viewed from the front side for explaining the transmission of the detection waves with low directivity according to the first embodiment;
Fig. 6 is a flowchart of a living body detection processing performed by a processing unit according to the first embodiment;
Fig. 7 is a flowchart of a classification processing performed by the processing unit according to the first embodiment;
Fig. 8 is a view of a rear portion of a vehicle interior viewed from a front side for explaining a transmitting direction of detection waves by a transmitting and receiving unit according to the second embodiment;
Fig. 9 is a side view of an interior of a vehicle for explaining transmission of detection waves with high directivity according to the third embodiment; and
Fig. 10 is a view of the vehicle interior viewed from a front side for explaining transmission of detection waves with high directivity according to the third embodiment.

### DETAILED DESCRIPTION

First to third embodiments are explained with reference to the attached drawings. The first to third embodiments bear the same reference numerals for similar components and duplicative explanation is appropriately omitted.

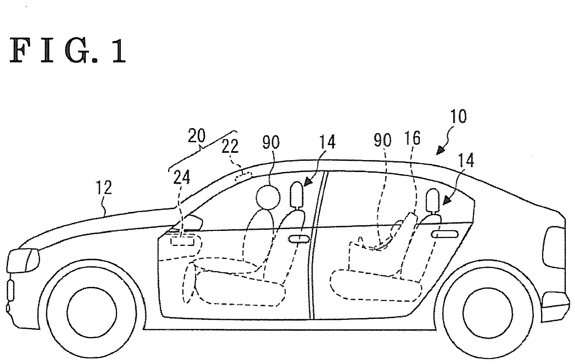

The first embodiment is explained as below. As illustrated in Fig. 1, a living body detection system 20 according to the first embodiment is mounted at a vehicle 10 serving as an example of a movable body. The vehicle 10 may be an automobile including an internal combustion engine (engine) as a drive source (i.e., an internal combustion engine automobile), an automobile including an electric motor (motor) as a drive source (i.e., an electric automobile and a fuel cell automobile, for example), and an automobile including both the engine and the motor as a drive source (i.e., a hybrid automobile), for example. In addition, the vehicle 10 may include any types of transmission devices and any types of devices (including systems and components, for example) for driving the internal combustion engine and the electric motor. A system, the number, and a layout, for example, of a device related to driving of wheels of the vehicle 10 may be appropriately employed or specified.

As illustrated in Fig. 1, the vehicle 10 includes a vehicle body 12, plural seats 14, and the living body detection system 20.

The vehicle body 12 constitutes a vehicle interior where a living body 90 such as a passenger, for example, is in. The vehicle body 12 accommodates or holds components of the vehicle 10 such as the seats 14 and the living body detection system 20, for example.

The plural seats 14 are provided at the vehicle interior. Specifically, the seats 14 include a front seat provided at a front side in the vehicle interior and a rear seat provided at a rear side in the vehicle interior. The seats 14 may include a third-row seat or the third-row seat and more. Each of the seats 14 is configured so that a child seat 16 for an infant is mountable. At this time, the infant is less than six years old, as an example.

The living body detection system 20 is mounted at the vehicle 10 to detect the living body 90 such as an adult, an infant, and an animal, for example, at the inside of the vehicle 10. At this time, the animal corresponds to a small animal such as a dog and a cat, for example. The living body detection system 20 includes a transmitting and receiving unit 22 and a living body detection device 24.

The transmitting and receiving unit 22 is provided at a ceiling of the vehicle 10. The transmitting and receiving unit 22 transmits and receives detection waves at the inside of the vehicle 10 so as to output a receiving signal based on the received detection waves. The transmitting and receiving unit 22 is a Doppler sensor utilizing a Doppler effect of radio waves or a radar sensor, for example. The detection waves are radio waves of millimeter-waves or microwaves, for example.

Specifically, in a case where the transmitting and receiving unit 22 transmits the detection waves to the inside of the vehicle 10, the detection waves penetrate through a material with low electric permittivity such as resin constituting the seats 14 and the child seat 16, for example, and are reflected from the living body 90 such as the passenger or a metallic material, for example. Thus, the transmitting and receiving unit 22 receives the detection waves reflected from the living body 90 or the metallic material, for example. In a case where the living body 90 such as an adult, for example, is directly seated in the seat 14, and the living body 90 such as an infant, for example, is placed on the child seat 16 at the inside of the vehicle, the transmitting and receiving unit 22 receives the detection waves including living body information of the living body 90. In this case, the transmitting and receiving unit 22 outputs the receiving signal based on the living body information included in the detection waves.

The transmitting and receiving unit 22 is configured to change a detection width serving as the width of the detection waves which are transmitted and received. The detection width is an angle of an area (region) where the detection waves are transmitted in a direction orthogonal to a transmitting direction of the detection waves. For example, in a first state, the transmitting and receiving unit 22 transmits the detection waves with directivity to a position at which the living body 90 is seated on any of the seats 14. The transmitting and receiving unit 22 receives the reflected detection waves from a specific direction with increased sensitivity than the reflected detection waves in other directions. That is, the transmitting and receiving unit 22 also receives the detection waves with directivity. Accordingly, the transmitting and receiving unit 22 transmits and receives the detection waves with which the position of the living body 90 is highly sensitively identifiable. The aforementioned first state is an example of a state where a drive source of the vehicle 10 is being driven. The transmitting and receiving unit 22 transmits the detection waves with low directivity or no directivity to a wide area (for example, a whole area) in the vehicle interior in a second state. Accordingly, the transmitting and receiving unit 22 transmits and receives the detection waves by which the living body 90 at substantially the whole area in the vehicle interior is detectable at once. The second state serves as an example of a state where the drive source of the vehicle 10 is stopped.

The living body detection device 24 controls the transmission of the detection waves by the transmitting and receiving unit 22 and extracts the living body information from the receiving signal based on the received detection waves received by the transmitting and receiving unit 22 to thereby detect the living body 90 inside the vehicle 10.

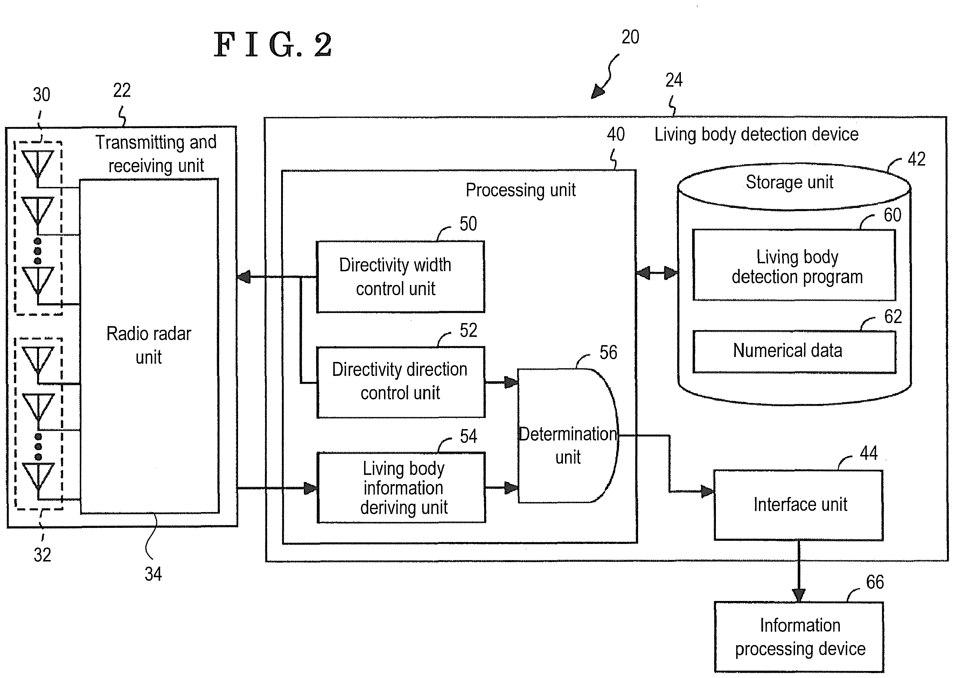

As illustrated in Fig. 2, the living body detection system 20 includes the transmitting and receiving unit 22 and the living body detection device 24.

The transmitting and receiving unit 22 is connected to the living body detection device 24 so as to selectively input and output an electric signal or an optical signal of information, for example, to the living body detection device 24 through radio communication or wire communication. The transmitting and receiving unit 22 includes a transmitting unit 30, a receiving unit 32, and a radio radar unit 34.

The transmitting unit 30 includes plural transmitting antennas arranged in an array configuration. The plural transmitting antennas may be arranged in a matrix configuration so as to be disposed in two directions. The transmitting unit 30 transmits the detection waves based on a transmitting signal acquired from the radio radar unit 34. For example, the transmitting unit 30 may transmit the detection waves including phase differences from one another from the plural transmitting antennas in the first state so as to transmit the detection waves with directivity (relatively high directivity). In addition, the transmitting unit 30 may transmit the detection waves with relatively low or no directivity by transmitting the detection waves from the single transmitting antenna among the plural transmitting antennas in the second state.

The receiving unit 32 includes plural receiving antennas arranged in an array configuration. The plural receiving antennas may be arranged in a matrix configuration so as to be disposed in two directions. The receiving unit 32 receives the detection waves reflected from the living body 90 at the vehicle 10 such as a human or an animal, for example, and outputs the receiving signal of which strength changes in chronological order based on the aforementioned detection waves to the radio radar unit 34. At this time, in the first state, the receiving unit 32 receives the detection waves coming from the same direction and including the phase differences from one another by the plural receiving antennas. The receiving unit 32 outputs the receiving signal with which a receiving direction of the detection waves is identifiable, by controlling and adjusting the respective phases of the detection waves including the phase differences received by the plural receiving antennas. That is, the detection waves received by the receiving unit 32 include directivity in the receiving direction. On the other hand, in the second state, the receiving unit 32 outputs the receiving signal based on the detection waves received by the single receiving antenna to thereby output the receiving signal with low or no directivity.

The radio radar unit 34 outputs the transmitting signal acquired from the living body detection device 24 to the transmitting unit 30 so as to transmit the detection waves with directivity from the transmitting unit 30. The radio radar unit 34 may output the transmitting signal which is amplified to the transmitting unit 30. The radio radar unit 34 outputs the receiving signal obtained from the receiving unit 32 to the living body detection device 24. The radio radar unit 34 may perform a signal processing on the receiving signal based on the phase differences, for example, to output the receiving signal with directivity from which the receiving direction is identifiable. Further, the radio radar unit 34 may output the receiving signal which is digital converted and amplified to the living body detection device 24.

The living body detection device 24 is a computer such as an electronic control unit (ECU), for example. The living body detection device 24 includes a processing unit 40, a storage unit 42, and an interface unit 44.

The processing unit 40 is a hardware processor such as a central processing unit (CPU), for example. The processing unit 40 includes a directivity width control unit 50, a directivity direction control unit 52, a living body information deriving unit 54, and a determination unit 56. The processing unit 40 functions as the directivity width control unit 50, the directivity direction control unit 52, the living body information deriving unit 54, and the determination unit 56 by reading a living body detection program 60 stored at the storage unit 42, for example. The directivity width control unit 50, the directivity direction control unit 52, the living body information deriving unit 54, and the determination unit 56 may be partially or entirely constituted by a circuit such as an application specific integrated circuit (ASIC) and a field-programmable gate array (FPGA), for example.

The directivity width control unit 50 controls switching of the detection width of the detection waves transmitted by the transmitting unit 30. For example, the directivity width control unit 50 may control the detection width of the detection waves by specifying the number of transmitting antennas transmitting the detection waves and the number of receiving antennas (i.e., the number of effective elements) based on directivity width information.

The directivity width control unit 50 may change the detection width of the detection waves depending on circumstances. For example, in the first state, the directivity width control unit 50 may increase the directivity of the detection waves by specifying the detection width thereof to a first width to decrease an area where the detection waves are transmitted, so that the position of the living body 90 is identifiable. In addition, in the second state, the directivity width control unit 50 may decrease or eliminate the directivity of the detection waves by specifying the detection width thereof to a second width to increase the area where the detection waves are transmitted, so that the living body 90 in a wide range is detectable. Specifically, the directivity width control unit 50 may employ all the transmitting antennas and receiving antennas in a state where the detection width is specified to the first width so that the detection width of the detection waves is specified in a range from 10 degrees to 30 degrees. On the other hand, the directivity width control unit 50 may employ the single transmitting antenna and the single receiving antenna in a state where the detection width is specified to the second width so that the detection width of the detection waves is specified in a range from 150 degrees to 180 degrees. The directivity width control unit 50 outputs the directivity width information as a part of the transmitting signal to the transmitting and receiving unit 22.

The directivity direction control unit 52 controls the transmitting direction of the detection waves transmitted by the transmitting unit 30 and the receiving direction of the detection waves by a method such as a beamforming control with an adaptive array antenna, for example, in a case where the detection width of the detection waves is specified to the first width in the first state.

For example, the directivity direction control unit 52 may control the transmitting direction by specifying the phase differences of the detection waves transmitted by the transmitting unit 30 as directivity direction information. The directivity direction control unit 52 may move the transmitting direction of the detection waves at the inside of the vehicle by changing the phase differences. The directivity direction control unit 52 outputs the directivity direction information indicating the phase differences which are specified as a part of the transmitting signal to the transmitting and receiving unit 22 and the directivity direction information to the determination unit 56.

The directivity direction control unit 52 may control or specify the receiving direction of the detection waves with increased sensitivity by controlling and adjusting the phases of the received detection waves including the phase differences from one another. The directivity direction control unit 52 may move the receiving direction of the detection waves within the vehicle by changing the aforementioned phase differences. The directivity direction control unit 52 outputs the phase differences of the detection waves to be changed to the transmitting and receiving unit 22 as a part of the directivity direction information and outputs the directivity direction information to the determination unit 56.

The directivity direction control unit 52 moves the transmitting direction and the receiving direction of the detection waves with directivity between areas (detection areas) which are arranged being separated from each other. For example, the directivity direction control unit 52 may move the transmitting direction and the receiving direction of the detection waves between the detection areas, which are separated from each other, on the seat 14 where the living body 90 is seated. In this case, the directivity direction control unit 52 may move the transmitting direction and the receiving direction in a discrete manner by specifying the phase differences in a discrete manner.

The living body information deriving unit 54 derives the living body information as a numerical value from the receiving signal in a case where the living body information is included in the receiving signal acquired from the transmitting and receiving unit 22. An example of the living body information as the numerical value is a heart rate of the living body 90. In a case where the detection waves are reflected from the chest of the living body 90 such as a human, for example, the detection waves indicate a Doppler frequency which is related to the heart rate serving as the living body information, because of a Doppler effect caused by the chest that oscillates or vibrates in a front-rear direction. Thus, the living body information deriving unit 54 may extract the Doppler frequency derived from the receiving signal of the detection waves as the living body information. The living body information deriving unit 54 may extract the Doppler frequency after removing a delay profile from the receiving signal. The delay profile is a predetermined profile for removing influence of the detection waves reflected from a structure within the vehicle 10 other than the living body 90. Thus, the delay profile may be generated by transmitting and receiving the detection waves at the inside of the vehicle without the living body 90. The living body information deriving unit 54 outputs the living body information to the determination unit 56 in a case where the Doppler frequency is extracted from the receiving signal as the heart rate as the living body information.

The determination unit 56 determines whether or not the living body 90 exists and then classifies or categorizes the living body 90 when the living body 90 exists at the inside of the vehicle. For example, the determination unit 56 determines that the living body 90 exists at the inside of the vehicle 10 based on the living body information acquired from the living body information driving unit 54. The determination unit 56 may determine presence of the living body information of the living body 90 based on the heart rate indicated by the living body information and a heart rate range. The heart rate range is appropriately specified on a basis of the heart rate of the living body 90, for example, and may be stored at the storage unit 42 as a part of numerical data 62. The heart rate range may be approximately from 10 times per minute to 200 times per minute, for example. The determination unit 56 may determine that the living body 90 such as a passenger exists at the inside of the vehicle 10 in a case where the heart rate falls within the heart rate range, for example.

The determination unit 56 determines whether or not the living body 90 is an adult based on the heart rate of the living body information and a threshold heart rate. The heart rate is the example of the living body information as the numerical value. The threshold heart rate is an example of a threshold value. The threshold heart rate may be predetermined and stored at the storage unit 42 as a part of the numerical data 62. The threshold heart rate may be 70 times per minute to 80 times per minute, for example. In a case where the heart rate indicated by the living body information is smaller than the threshold heart rate included in the numerical data 62, the determination unit 56 determines that the detected living body 90 is an adult. The determination unit 56 may determine that the living body 90 is an animal or an infant, not an adult, in a case where the heart rate indicated by the living body information is greater than the threshold heart rate included in the numerical data 62. The determination unit 56 may classify or categorize the living body 90 into any of an adult, an infant, and an animal in a case where the heart rate of the living body information and the threshold heart rate match each other.

In a case where the determination unit 56 determines that the living body 90 is not an adult, the determination unit 56 may then determine whether the living body 90 is an infant or an animal. Specifically, the determination unit 56 determines the position at which the detected living body 90 is seated and calculates a height of the position from a seating surface of the seat 14 (which is hereinafter called a height position) based on the directivity direction information acquired from the directivity direction control unit 52. For example, the determination unit 56 may calculate a distance to the living body 90 based on the receiving signal and calculate the height position based on the aforementioned distance and the transmitting and receiving directions of the detection waves indicated by the directivity direction information. The determination unit 56 may classify the living body 90 into an infant or an animal based on the height position of the living body 90 and a threshold height. The threshold height may be stored at the storage unit 42 as a part of the numerical data 62 which is specified beforehand. The threshold height may be approximately several centimeters to several dozen centimeters, for example. For example, the determination unit 56 may determine that the living body 90 is an animal in a case where the height position of the living body 90 is lower than the threshold height. The determination unit 56 may determine that the living body 90 is an infant in a case where the height position of the living body 90 is greater than the threshold height. This is because the animal tends to be directly seated on the seating surface of the seat 14 while the infant is seated on the child seat 16 placed on the seat 14. In a case where the height position matches the threshold height, the determination unit 56 may classify the living body 90 into any one of the infant and the animal.

The determination unit 56 stores a determination result of whether or not the living body 90 exists, the position of the living body 90, and the classification (type) of the living body 90 and outputs the determination result to an information processing device 66 via the interface unit 44.

The storage unit 42 includes a storage device such as a random access memory (RAM), a read only memory (ROM), a solid state drive (SSD), and a hard disk drive (HDD), for example. The storage unit 42 may be an external storage device connected via a network, for example. The storage unit 42 is connected to the processing unit 40 so that information is selectively input and output between the storage unit 42 and the processing unit 40. The storage unit 42 stores program performed by the processing unit 40, data necessary for executing the program by the processing unit 40, and data generated by the execution of the program by the processing unit 40, for example.

The storage unit 42 stores the living body detection program 60 executed by the processing unit 40, for example. The living body detection program 60 may be provided while being stored at a storage medium readable by a computer such as a compact disc read only memory (CD-ROM) and a digital versatile disc read only memory (DVD-ROM), for example, or provided via a network such as an internet, for example. The storage unit 42 stores the detection width, the detection areas for specifying the transmitting and receiving directions, and the numerical data 62 including the threshold heart rate and the threshold height for classifying the detected living body 90, for example, as data necessary for executing the living body detection program 60. The storage unit 42 may tentatively store the living body information and the determination result generated by the execution of the living body detection program 60, for example.

The interface unit 44 is provided to deal with input and output between the living body detection device 24 and the information processing device 66 which is disposed outside the living body detection system 20. Thus, the interface unit 44 outputs information which is output from the living body detection device 24 to the information processing device 66 and outputs information which is output from the information processing device 66 to the living body detection device 24. For example, the interface unit 44 outputs a determination result which is output from the determination unit 56 of the living body detection device 24 to the information processing device 66.

The information processing device 66 is a computer such as an ECU to serve as a superior device than the living body detection device 24 mounted at the vehicle 10. The information processing device 66 controls a device (devices) at the inside of the vehicle 10 based on the living body information and the determination result acquired from the living body detection device 24. In a case where the living body 90 is detected during the driving of the vehicle 10, for example, the information processing device 66 causes an image instructing the living body 90 to fasten a seatbelt, for example, depending on the classification (type) of the detected living body 90 and the seating position thereof, for example. In a case where the living body 90 such as an infant, for example, is detected while the vehicle 10 is being stopped, the information processing device 66 may output to a mobile terminal of an owner of the vehicle 10 such as a smartphone, for example, that the living body 90 is detected.

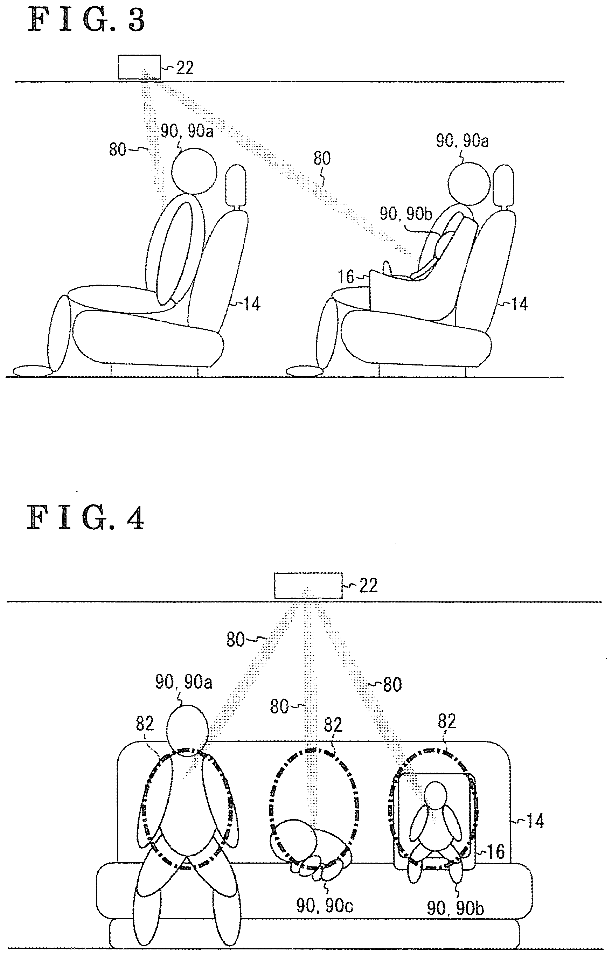

As illustrated in Figs. 3 and 4, the transmitting and receiving unit 22 transmits detection waves 80 with the first width including relatively high directivity in the first state. For example, the transmitting and receiving unit 22 may transmit the detection waves 80 with high directivity to detection areas 82 in a discrete manner. That is, it may be not necessary for the transmitting and receiving unit 22 to transmit the detection waves 80 to an area other than the detection areas 82. The detection areas 82 may be specified beforehand while including areas where a passenger is seated. In this case, the directivity width control unit 50 generates the directivity width information including an instruction for utilizing all the plural transmitting antennas and plural receiving antennas and the directivity direction control unit 52 specifies the phase differences indicated by the directivity direction information in a discrete manner. Accordingly, the transmitting and receiving unit 22 transmits and receives the detection waves 80 with which the living body 90 is detectable and the height of the living body 90 is identifiable on a basis of the distance to the living body 90 and the transmitting and receiving directions of the detection waves 80.

As illustrated in Fig. 4, the chest of an adult 90a, the chest of an infant 90b on the child seat 16, and the chest of an animal 90c have different heights in the vehicle and the heart rates of the adult 90a, the infant 90b, and the animal 90c are different from one another. Accordingly, the determination unit 56 is configured to determine whether the detected living body 90 is the adult 90a, the infant 90b, or the animal 90c based on the height position and the heart rate of the detected living body 90. In a case where it is not necessary to distinguish the adult 90a, the infant 90b, and the animal 90c from one another, the adult 90a, the infant 90b, and the animal 90c are hereinafter collectively referred to as the living body 90.

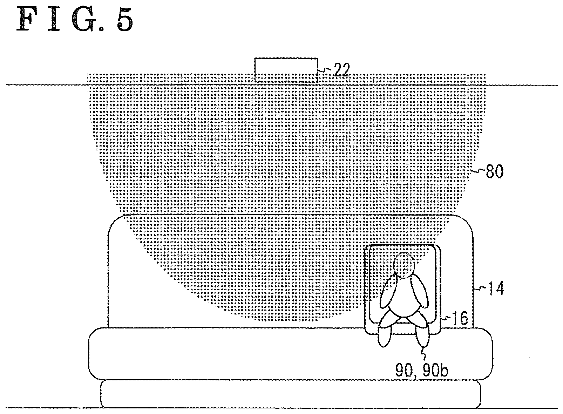

As illustrated in Fig. 5, the transmitting and receiving unit 22 transmits the detection waves with the second width including relatively low directivity or no directivity in the second state. In this case, the directivity width control unit 50 generates the directivity width information including an instruction for utilizing the single transmitting antenna among the plural transmitting antennas and the single receiving antenna among the plural receiving antennas. Accordingly, the determination unit 56 may determine whether or not the living body 90 exists at substantially whole area in the vehicle interior based on the receiving signal of the detection waves 80 which are received and transmitted by the transmitting and receiving unit 22.

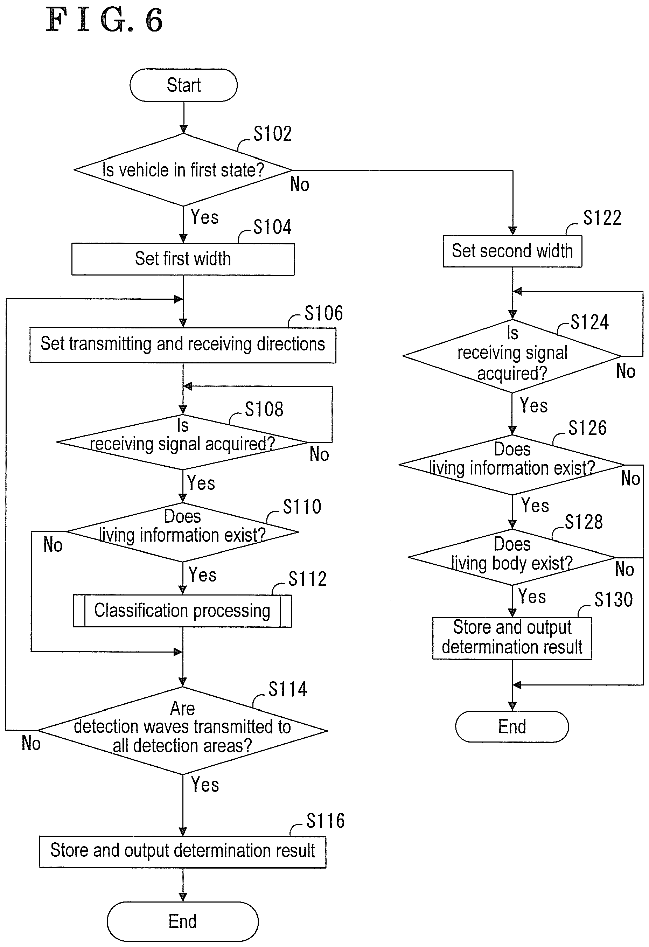

As illustrated in Fig. 6, the processing unit 40 performs a living body detection processing according to the first embodiment by reading the living body detection program 60.

As illustrated in Fig. 6, in the living body detection processing, the directivity width control unit 50 determines whether or not the vehicle 10 is in the first state (S102). In a case where the directivity width control unit 50 determines that the vehicle 10 is in the first state based on the driving state of the drive source, for example (Yes at S102), the directivity width information where the detection width of the detection waves 80 is specified to the first width with relatively high directivity is generated and output to the transmitting and receiving unit 22 (S104).

The directivity direction control unit 52 specifies the transmitting direction and receiving directions of the detection waves 80 (S106). Specifically, the directivity direction control unit 52 specifies the directivity direction information indicating the phase differences depending on the transmitting direction and the receiving direction of the detection waves 80 and outputs the specified directivity direction information to the transmitting and receiving unit 22 and the determination unit 56. For example, the directivity direction control unit 52 may specify the directivity direction information indicating the phase differences depending on the transmitting direction and the receiving direction related to any of the detection areas 82.

The radio radar unit 34 of the transmitting and receiving unit 22 acquires the transmitting signal including the detection width and the phase differences indicating the transmitting and receiving directions from the directivity width control unit 50 and the directivity direction control unit 52 and then transmits the detection waves 80 with the first width in the transmitting direction in response to the aforementioned transmitting signal to the transmitting unit 30. In a case where the receiving unit 32 receives the detection waves 80, the radio radar unit 34 outputs the receiving signal where the receiving direction of the received detection waves 80 indicated by the directivity direction information has increased sensitivity to the living body detection device 24.

The living body information deriving unit 54 determines whether or not the receiving signal is acquired (S108). The living body information deriving unit 54 is brought to a standby state until the receiving signal is acquired (No at S108).

When the receiving signal is acquired (Yes at S108), the living body information deriving unit 54 determines whether or not the living body information (i.e., the heart rate, in this case) is included in the receiving signal (S110). For example, the living body information deriving unit 54 determines whether or not the Doppler frequency serving as the living body information is included in the receiving signal after the delay profile is removed from the receiving signal. The living body information deriving unit 54 may determine presence of the living body information by whether or not the Doppler frequency is extractable from the receiving signal.

In a case where the living body information deriving unit 54 determines that the living body information is not included in the receiving signal (No at S110), operations at step S114 and later are performed. When determining that the living body information is included in the receiving signal (Yes at S110), the living body information deriving unit 54 outputs the aforementioned living body information together with the receiving signal to the determination unit 56.

The determination unit 56, which once acquires the living body information, performs a classification processing for classifying the living body 90 in the aforementioned living body information (S112).

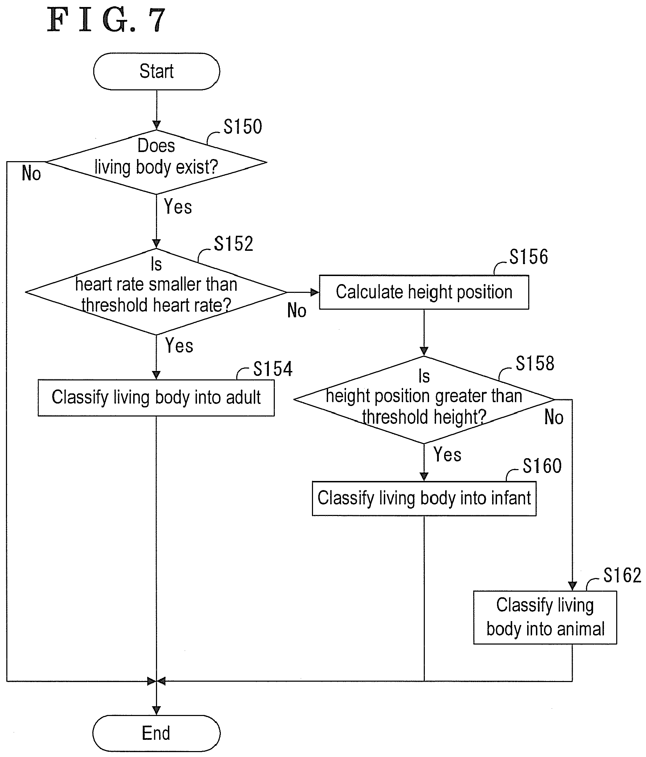

As illustrated in Fig. 7, the determination unit 56 determines whether or not the living body 90 exists in the transmitting and receiving directions of the detection waves 80 (S150). For example, the determination unit 56 determines that the living body 90 exists in a case where the heart rate indicated by the living body information falls within a frequency range and determines that the living body 90 does not exist in a case where the heart rate indicated by the living body information is out of the frequency range. The determination unit 56 terminates the classification processing when determining that the living body 90 does not exist (No at S150) and performs the operations at step S114 and later.

When determining that the living body 90 exists (Yes at S150), the determination unit 56 determines whether or not the heart rate of the living body information is smaller than the threshold heart rate (S152). In a case where the determination unit 56 determines that the heart rate of the living body information is smaller than the threshold heart rate (Yes at S152), the living body 90 is classified into the adult 90a (S154). In a case where the determination unit 56 determines that the heart rate of the living body information is greater than the threshold heart rate (No at S152), a distance to the living body 90 in the receiving direction is calculated so as to calculate the height position of the living body 90 based on the aforementioned distance and the transmitting and receiving directions indicated by the directivity direction information (S156).

The determination unit 56 determines whether or not the height position of the living body 90 is higher than the threshold height (S158). In a case where the height position of the living body 90 is higher than the threshold height (Yes at S158), the determination unit 56 classifies the living body 90 into the infant 90b (S160). On the other hand, in a case where the height position of the living body 90 is lower than the threshold height (No at S158), the determination unit 56 classifies the living body 90 into the animal 90c (S162). The determination unit 56 terminates the classification processing after performing any of the operations at steps S154, S160, and S162, to perform the operations at S114 and later.

Back to Fig. 6, the determination unit 56 determines whether or not the detection waves 80 are transmitted to all the detection areas 82 (S114). In a case where the determination unit 56 determines that the detection waves 80 are not transmitted to all the detection areas 82 (No at S114), the processing unit 40 repeats the operations at S106 and later. In the operation at the second time or more at step S106, the directivity direction control unit 52 specifies the directivity direction information indicating that the phase differences are set in a discrete manner relative to the phase differences which have been already set, so that the transmitting and receiving directions may be provided in a discrete manner, and outputs the aforementioned directivity direction information to the determination unit 56. In a case where the processing unit 40 repeats the operations at S106 and later and the determination unit 56 determines that the detection waves 80 are transmitted to all the detection areas 82 by the transmitting and receiving unit 22 (Yes at S114), the determination unit 56 stores the determination result including whether or not the living body 90 exists, the position of the living body 90, and the classification (type) of the living body 90 and outputs such determination result to the information processing device 66 via the interface unit 44 (S116).

When it is determined that the vehicle is not in the first state, i.e., the vehicle is in the second state (No at S102), the directivity width control unit 50 specifies the detection width to the second width and outputs the transmitting signal indicating the second width to the transmitting and receiving unit 22 (S122).

In a case where the radio radar unit 34 of the transmitting and receiving unit 22 acquires the transmitting signal including the detection with from the directivity width control unit 50, the radio radar unit 34 causes the transmitting unit 30 to transmit the detection waves 80 to substantially entire area within the vehicle based on the second width indicated by the transmitting signal. When the receiving unit 32 receives the detection waves 80, the radio radar unit 34 outputs the receiving signal in response to the detected detection waves 80 to the living body detection device 24.

The living body information deriving unit 54 determines whether or not the receiving signal is obtained (S124). The living body information deriving unit 54 is brought to a standby state until the receiving signal is obtained (No at S124).

When receiving the receiving signal (Yes at S124), the living body information deriving unit 54 determines whether or not the living body information (in this case, the heart rate) is included in the receiving signal (S126). In a case where the living body information deriving unit 54 determines that the living body information is not included in the receiving signal (No at S126), the processing unit 40 terminates the living body detection process. When determining that the living body information is included in the receiving signal (Yes at S126), the living body information deriving unit 54 outputs the living body information to the determination unit 56. The determination unit 56 determines whether or not the living body 90 exists on a basis of whether or not the heart rate indicated by the living body information falls within the heart rate range (S128). In a case where the determination unit 56 determines that the living body 90 does not exist (No at S128), the processing unit 40 terminates the living body detection processing. When determining that the living body 90 exists (Yes at S128), the determination unit 56 stores the determination result including whether or not the living body 90 exists, the position and the classification of the living body 90 at the storage unit 42 and outputs such determination result to the information processing device 66 (S130). As a result, the processing unit 40 terminates the living body detection processing.

As mentioned above, according to the living body detection system 20, the detection waves 80 including directivity are transmitted. Thus, the living body detection system 20 determines whether or not the living body 90 exists at the inside of the vehicle 10 and, when the living body 90 exits, detects the position thereof at the inside of the vehicle 10 highly accurately. In addition, because the transmission of the detection waves 80 with directivity to portions other than the seating positions within the vehicle decreases, wrong detection caused by a reflection from an object other than the seating positions may be reduced. Further, the living body detection system 20 may classify or distinguish the living body 90 such as the infant 90b and the animal 90c, for example, including the similar heart rates, based on the position of the living body 90.

According to the living body detection system 20, the detection width of the detection waves 80 is changed to thereby change the size of the detection area where the living body 90 is detectable by the detection waves 80 depending on intended use. Accordingly, the living body detection system 20 increases directivity of the detection waves 80 by specifying the detection width of the detection waves 80 to the first width which is smaller to thereby highly accurately determine the position of the living body 90 and determine the type of the living body 90. On the other hand, the living body detection system 20 specifies the detection width of the detection waves 80 to the second width which is greater to thereby transmit and receive the detection waves 80 relative to the inside of the vehicle, so that whether or not the living body 90 exists is determinable at a wide area within the vehicle with a less processing burden of one time transmission and reception of the detection waves 80. Accordingly, the living body detection system 20 may detect the infant 90b confined or trapped within the vehicle 10 and an intruder thereto regardless of a construction and a layout of the seats 14 of the vehicle 10 such as a van, for example.

According to the living body detection system 20, the transmitting direction and the receiving direction of the detection waves 80 with high directivity are moved to detect the living body 90 at plural specific portions (for example, seating areas) within the vehicle 10 by the less number of transmitting and receiving unit 22. In addition, the detection waves 80 are moved to detect the living body 90 at plural portions within the vehicle 10 regardless of a mounting position of the transmitting and receiving unit 22. Further, the transmitting direction and the receiving direction of the detection waves 80 with high directivity are moved in a discrete manner to thereby decrease the number of processing times of the receiving signal.

According to the living body detection system 20, the heart rate which differs depending on the type of the living body 90 is extracted as the living body information from the receiving signal. Thus, the type of the living body 90 is determinable (for example, whether the living body is the adult 90a or not) on a basis of the heart rate and the threshold heart rate.

The living body detection system 20 detects the living body 90 by the Doppler frequency, which may decrease a wrong detection that an object is detected as the living body 90, for example.

A second embodiment where at least one of the transmitting direction and the receiving direction is continuously changed is explained below.

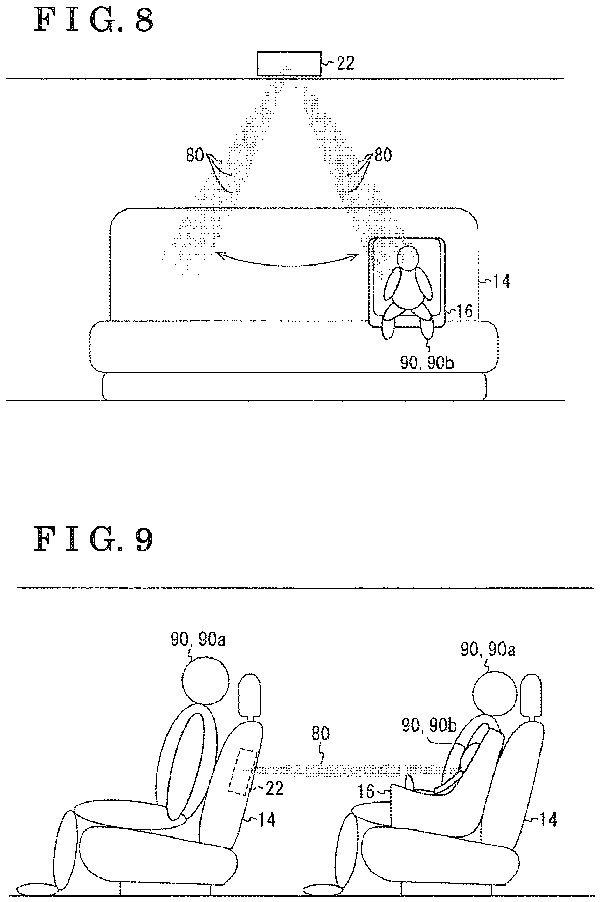

As illustrated in Fig. 8, the transmitting unit 30 of the transmitting and receiving unit 22 according to the second embodiment continuously moves the transmitting direction and the receiving direction of the detection waves 80 at the inside of the vehicle. For example, the directivity direction control unit 52 continuously changes the phase differences among the detection waves 80 transmitted from the plural transmitting antennas of the transmitting unit 30. The transmitting unit 30 may continuously move the detection waves 80 at an entire area on each of the seats 14, for example. In this case, the transmitting unit 30 may not transmit the detection waves 80 to an area other than the seats 14. The transmitting and receiving unit 22 may continuously control and adjust the phase differences of the detection waves 80 received by the receiving unit 32 so as to continuously move the receiving direction of the detection waves 80.

The living body detection processing according to the second embodiment is the same as that of the first embodiment except that the directivity direction control unit 52 continuously specifies the phase differences so as to continuously move the transmitting and receiving directions at step S106.

According to the living body detection system 20 of the second embodiment, at least one of the transmitting direction and the receiving direction of the detection waves 80 is continuously moved at the inside of the vehicle, so that the living body 90 is detectable regardless of the layout, inclination, and direction of each of the seats 14, for example. Accordingly, the living body detection system 20 may detect the living body 90 highly accurately even with the layout of the seats 14 constituted by a number of rows such as a bus, for example. The living body detection system 20 may highly accurately detect the living body 90 even in a case where the living body 90 is displaced from the seating area because the seat 14 is tilted back for sleeping, or the arrangement of the seat 14 is changed to turn backward, for example.

A third embodiment which is different from the first embodiment in the mounting position of the transmitting and receiving unit 22 is explained.

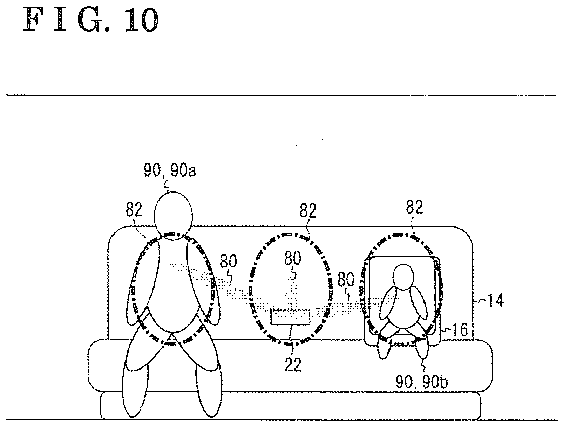

As illustrated in Figs. 9 and 10, the transmitting and receiving unit 22 may be provided at a front side of the seat 14 in the rear. For example, the transmitting and receiving unit 22 may be arranged inside a seatback of the seat 14 in the front. In this case, another transmitting and receiving unit 22 for detecting the living body 90 at the seat 14 in the front may be provided inside a dashboard, for example.

Functions, connection relations, quantities, and arrangements of the constructions of the aforementioned embodiments may be appropriately changed or deleted, for example. The aforementioned embodiments may be appropriately combined to one another. Orders of steps in the processing according to each of the embodiments may be appropriately changed.

In the aforementioned embodiments, the vehicle 10 serves as an example of the movable body. A two-wheel vehicle may also serve as an example of the movable body. In addition, a boat, a ship, and an airplane, for example, may serve as examples of the movable body.

In the aforementioned embodiments, the transmitting direction of the detection waves 80 is controlled on a basis of the phase differences, for example. A method of controlling the transmitting direction of the detection waves 80 is not limited to be based on the phase differences. For example, the transmitting and receiving unit 22 may change the transmitting direction or the receiving direction by mechanically rotating the direction of the transmitting unit 30 or the receiving unit 32. In this case, at least one of the transmitting unit 30 and the receiving unit 32 may be constituted by a parabola antenna, for example.

In the aforementioned embodiments, the detection waves 80 transmitted and received by the transmitting and receiving unit 22 include directivity in both the transmitting direction and the receiving direction. The construction of the transmitting and receiving unit 22 is not limited to the above. The detection waves 80 transmitted and received by the transmitting and receiving unit 22 may include directivity in at least one of the transmitting direction and the receiving direction.

In the aforementioned embodiments, the directivity width control unit 50 switches or changes the directivity width by specifying the number of transmitting antennas employed for use at the transmitting unit 30 and the number of receiving antennas employed for use at the receiving unit 32. A method of switching the directivity width is not limited to the above. For example, the transmitting and receiving unit 22 may include plural transmitting units with different directivity widths from one another or plural receiving units with different directivity widths from one another, and the directivity width control unit 50 may switch or change the directivity width by selecting the appropriate transmitting unit or the appropriate receiving unit from the plural transmitting units or the plural receiving units.

In the aforementioned embodiments, the determination unit 56 determines whether or not the living body 90 exists on a basis of the heart rate extracted from the Doppler frequency as the living body information. A method of determining the living body 90 is not limited to the above. For example, whether the living body 90 exists or not may be determined by a pulse system or a frequency modulated continuous wave (FMCW) system, for example.

In the aforementioned embodiments, the living body information deriving unit 54 processes the receiving signal of which strength changes in chronological order. A method of processing the receiving signal by the living body information deriving unit 54 is not limited to the above. For example, the living body information deriving unit 54 may derive the existence of the living body 90 and the living body information by processing the receiving signal on which frequency conversion is performed by Fourier transformation, for example. Even in this case, the living body information deriving unit 54 may extract the living body information from the receiving signal on which the frequency conversion is conducted after the delay profile is removed from the receiving signal on which the frequency conversion is not yet conducted, or from the frequency-converted receiving signal from which a profile obtained by conducting the frequency conversion on the delay profile is removed.

In the aforementioned embodiments, the determination unit 56 determines whether the living body 90 exists or not on a basis of the Doppler frequency included in the detection waves 80 which are transmitted and received by the antennas arranged in an array configuration. A method of determining whether the living body 90 exists or not is not limited to the above. For example, in a case where the transmitting and receiving unit 22 transmits the detection waves 80 with no directivity to the entire area within the vehicle, the determination unit 56 may determine that the living body 90 exists at the inside of the vehicle when a radio propagation channel is obtained by analyzing an eigenvalue (characteristic value) which is obtained by a multiple-input and multiple-output (MIMO). In addition, the determination unit 56 may determine whether the living body 90 exists or not at the inside of the vehicle based on fluctuation of the eigenvalue (characteristic value) by analyzing the eigenvalue (characteristic value) for the antennas arranged in a matrix configuration.

In the aforementioned embodiments, the determination unit 56 classifies the living body 90 in the first state. In the first state, the determination unit 56 may determine existence and position of the living body 90 and may not classify the living body 90. In this case, the determination unit 56 may omit operations other than the operation at step S150 in the classification processing. In the aforementioned embodiments, in the second state, the determination unit 56 is inhibited from conducting the classification processing. Alternatively, even in the second state, the determination unit 56 may perform the classification processing.

In the first embodiment, the single transmitting and receiving unit 22 is mounted at the ceiling. Alternatively, two or more than two transmitting and receiving units 22 may be mounted at the ceiling.

In the aforementioned embodiments, the living body detection system 20 is constructed so that the detection width of the detection waves 80 is changeable. The construction of the living body detection system 20 is not limited to the above. For example, the living body detection system 20 may be constructed so that only the first width with high directivity serves as the detection width. In this case, the operation at step S102 and the operations at step S122 and later may be omitted.

In the aforementioned embodiments, the heart rate is employed as the example of the living body information as the numerical value. Alternatively, a numerical value which differs depending on a living body and by which the living body is classified, such as a breathing rate, for example, may be employed as the living body information as the numerical value. In this case, a threshold breathing rate based on the breathing rate, for example, may serve as the threshold value. Further, the living body information may be information other than the numerical value, for example.

## Claims

1. A living body detection system (20) comprising:
a transmitting and receiving unit (22) configured to perform transmission and reception of detection waves (80) at an inside of a movable body (10), the detection waves (80) including directivity in at least one of the transmission and the reception of the detection waves (80), and
a processing unit (40) configured to control the transmission of the detection waves (80) and extracting living body information from a receiving signal based on the detection waves (80) received by the transmitting and receiving unit (22) to detect a living body (90) at the inside of the movable body (10).

2. The living body detection system (20) according to claim 1, wherein the transmitting and receiving unit (22) is configured to change a detection width serving as a width of the detection waves (80) which are transmitted or received by the transmitting and receiving unit (22),
the processing unit (40) is configured to detect the living body (90) by changing the detection width of the detection waves (80).

3. The living body detection system (20) according to claim 1 or 2, wherein the processing unit (40) is configured to move at least one of a transmitting direction and a receiving direction of the detection waves (80) including directivity between areas (82) which are arranged to be separated from one another.

4. The living body detection system (20) according to any one of claims 1 through 3, wherein the processing unit (40) is configured to continuously move at least one of a transmitting direction and a receiving direction of the detection waves (80) including directivity.

5. The living body detection system (20) according to claim 1, wherein the processing unit (40) is configured to extract the living body information as a numerical value from the receiving signal and to classify the living body (90) based on the numerical value and a threshold value.
